# DEMANDE DE BREVET EUROPEEN

(11) **EP 2 003 380 A1**
(43) Date de publication de la demande: **17.12.2008**
(21) Numéro de dépôt: 08104339.0
(22) Date de dépôt: 10.06.2008
(51) Int. Cl.: F16K 17/04

(54) **Soupape de sécurité et conteneur-citerne équipé d'une telle soupape**

(30) Priorité: 11.06.2007 FR 0755651
(71) Demandeur: Perolo S.A., 33390 Blaye (FR)
(72) Inventeur: Della Ragione, Jean, 33670 Sadirac (FR); Surman, Pierre, 33560 Carbon Blanc (FR)
(74) Mandataire: Schmit, Christian Norbert Marie

(57) **Abrégé**

L'invention concerne une soupape de sécurité comportant un corps de soupape (1) comprenant à une première extrémité un orifice d'entrée (2) et à son autre extrémité un orifice de sortie (3) de gaz, un siège (8) d'obturateur entourant l'orifice de sortie (3) et un obturateur comportant un joint (9) destiné à coopérer avec le siège (8) d'obturateur pour assurer l'étanchéité de la soupape. Selon l'invention, le corps de soupape (1) comporte un premier conduit (4) en communication de fluide avec lesdits orifices et un deuxième conduit (12) placé dans ce premier conduit (4), l'obturateur étant placé partiellement dans ce deuxième conduit (12) en étant relié à ce dernier. Le deuxième conduit (12) est en communication de fluide avec les orifices d'entrée et de sortie en étant sensiblement centré sur ceux-ci afin que le passage d'un volume de gaz de surpression dans la soupape entraîne le déplacement du deuxième conduit (12) entre une première position où l'obturateur est en contact étanche avec le siège (8) et une deuxième position où l'obturateur est au moins partiellement placé en saillie du corps de soupape (1) pour le passage du volume de gaz. La soupape comprend un organe de rappel placé entre les premier et deuxième conduits pour déplacer le deuxième conduit (12) dans sa première position après décharge.

## Description

La présente invention concerne une soupape de sécurité et un conteneur-citerne équipé d'une telle soupape.

On connaît des soupapes de sécurité utilisées sur des conteneurs-citernes et permettant de décharger à l'air libre des surpressions se formant à l'intérieur de ces conteneurs-citernes dans des conditions qui conduiraient en l'absence de telles soupapes à une explosion de ceux-ci.

De telles conditions peuvent par exemple survenir lorsque ces conteneurs-citernes sont exposés à des conditions de températures extrêmes conduisant à une brusque montée en pression des fluides contenus dans ceux-ci.

Ces soupapes fonctionnent selon un principe commun. En dessous d'une pression seuil préréglée, la pression de tarage, la soupape est fermée et le conteneur-citerne doit rester étanche. Quand la pression de tarage est atteinte ou dépassée, la soupape doit s'ouvrir automatiquement pour évacuer le débit de gaz de surpression et retourner à une pression supportable par le conteneur-citerne à protéger.

Toutefois, ces soupapes présentent l'inconvénient majeur de présenter dans le canal servant au passage du fluide pressurisé dans la soupape, un ou plusieurs ressorts servant à ramener en position de fermeture étanche un élément d'étanchéité après décharge.

Or ces ressorts présentent des surfaces d'interaction importantes du fait de leurs nombreuses spires qui interférèrent avec l'écoulement du flux de gaz évacué par le canal.

On a ainsi observé que les perturbations de flux dues au régime turbulent engendré par les spires des ressorts au contact de la veine de fluide en régime sonique engendrent des pertes de charge.

L'évacuation du flux de gaz est perturbée et le temps nécessaire à l'évacuation de ce flux est augmenté en conséquence. Ce temps d'évacuation peut s'avérer trop long pour assurer la sécurité du conteneur-citerne.

L'objectif de la présente invention est donc de proposer un dispositif de détente de pression, simple dans sa conception et dans son mode opératoire, compact et permettant d'évacuer rapidement un volume de gaz d'un conteneur-citerne pour empêcher l'explosion de celui-ci suite à soudaine augmentation de la pression.

A cet effet, l'invention concerne une soupape de sécurité de surpression comportant un corps de soupape comprenant à une première extrémité un orifice d'entrée de gaz et à son autre extrémité un orifice de sortie de gaz, un siège d'obturateur entourant l'orifice de sortie, le corps de soupape étant destiné à être connecté à un conteneur, et un obturateur comportant un joint destiné à coopérer avec le siège d'obturateur pour assurer l'étanchéité de la soupape.

Selon l'invention,
- le corps de soupape comporte un premier conduit en communication de fluide avec les orifices d'entrée et de sortie du corps de soupape, et un deuxième conduit placé dans ce premier conduit, l'obturateur étant placé partiellement dans le deuxième conduit en étant relié de manière amovible ou non à ce dernier,
- le deuxième conduit est en communication de fluide avec les orifices d'entrée et de sortie en étant sensiblement centré sur ces orifices afin que le passage d'un volume de gaz de surpression dans la soupape entraîne le déplacement de ce deuxième conduit entre une première position dite de fermeture de soupape où l'obturateur est en contact étanche avec le siège et une deuxième position dite de déchargement où l'obturateur est au moins partiellement placé en saillie du corps de soupape, le joint étant alors décalé du siège pour le passage du volume de gaz,
- la soupape comprend un organe de rappel placé entre le premier conduit et le deuxième conduit pour déplacer le deuxième conduit dans sa première position après décharge du gaz de surpression.

L'organe de rappel étant placé entre les parois des premier et deuxième conduits, et donc écarté du passage du flux de gaz évacué par le deuxième conduit, la soupape de l'invention permet avantageusement une attaque directe de l'obturateur par ce volume de gaz. Cette attaque directe de l'obturateur permet d'évacuer plus rapidement le volume de gaz de surpression et empêche ainsi les pertes de charge au travers de la soupape. Des mesures ont montré une augmentation d'au moins 10% du débit par rapport à des dispositifs de détente de l'art antérieur.
Le premier conduit est défini, de préférence, par une partie au moins du corps de soupape. A cet effet, le corps de soupape peut comporter une partie tubulaire formant ledit premier conduit.
Cette soupape de sécurité est destinée, à titre purement illustratif, à être mise en oeuvre dans une gamme de pression allant de 13 à 35 bars.

Dans différents modes de réalisation particuliers de cette soupape de sécurité, chacun ayant ses avantages particuliers et susceptibles de nombreuses combinaisons techniques possibles:
- les premier et deuxième conduits sont des tubes coaxiaux,
- une extrémité de cet organe de rappel est solidaire du deuxième conduit,
L'autre extrémité de l'organe de rappel est par exemple solidaire du corps de la soupape. La fixation de l'organe de rappel sur la surface externe du deuxième conduit peut être obtenu par soudage, collage, ...
- le deuxième conduit comprenant un élément annulaire placé en saillie sur sa surface externe, une extrémité de cet organe de rappel est en appui sur une face de cet élément annulaire,
- le deuxième conduit et/ou l'élément de guidage comportent des orifices pour établir une communication de fluide entre le premier conduit et le deuxième conduit et/ou l'élément de guidage,
L'organe de rappel étant un ressort de compression, ces orifices permettent d'évacuer avantageusement vers l'orifice de sortie de la soupape, les éventuels fluides présents entre les parois des premier et deuxième conduits et comprimés par le ressort lors de sa compression.
Ce ressort étant placé entre les parois des premier et deuxième conduits, il ne voit avantageusement pas le flux de gaz de surpression passant au travers du deuxième conduit et il n'induit pas de perturbations de celui-ci.
- l'obturateur est relié au deuxième conduit par au moins une patte,
Cette patte est avantageusement mince de manière à perturber le moins possible l'écoulement du gaz en surpression dans le deuxième conduit vers l'orifice de sortie.
- la soupape comporte un disque de rupture monté sur le corps de soupape et placé en amont du deuxième conduit sur le passage du gaz de surpression dans la soupape,
- la soupape comprend un élément de guidage pour guider le déplacement du deuxième conduit entre les positions de fermeture de soupape et de déchargement.

De préférence, cet élément de guidage est une portion de tube solidaire du corps de soupape. Il peut être en communication de fluide avec l'orifice de sortie ou avec l'orifice d'entrée du gaz.

L'invention concerne également un conteneur-citerne équipé d'au moins une soupape de sécurité telle que décrite précédemment.

L'invention sera décrite plus en détail en référence aux dessins annexés dans lesquels:
- la figure 1 représente schématiquement une vue en coupe d'une soupape de sécurité selon un mode de réalisation particulier de l'invention;
- la figure 2 est une vue en perspective de la soupape de sécurité de la Figure 1;

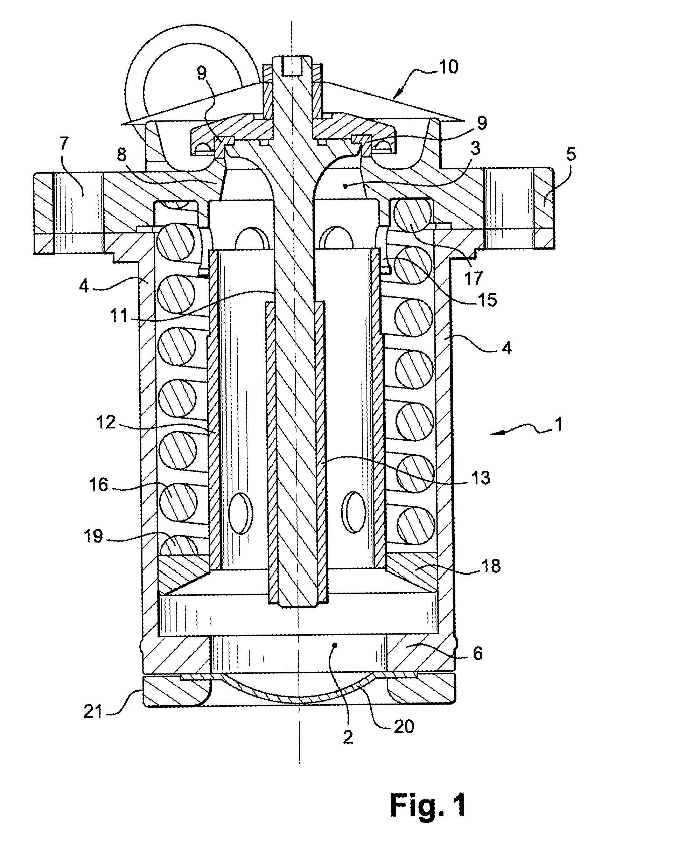

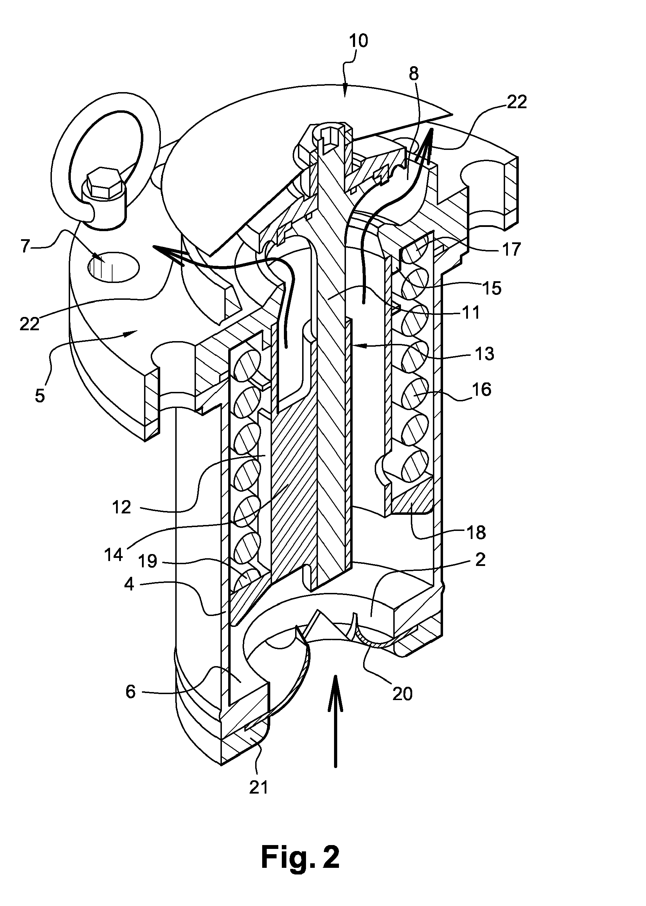

Les Figures 1 et 2 montrent une soupape de sécurité selon un mode de réalisation particulier de l'invention. Cette soupape de sécurité comprend un corps de soupape 1 comportant à une première extrémité un orifice d'entrée 2 de gaz et à son autre extrémité un orifice de sortie 3 de gaz.

Le corps de soupape 1 comporte également un premier conduit 4 défini par une portion tubulaire du corps de soupape, laquelle est reliée dans sa partie supérieure à une bride circulaire 5 comprenant l'orifice de sortie 3 de gaz. Le premier conduit 4 est relié dans sa partie inférieure une paroi 6 comportant l'orifice d'entrée 2 du gaz. Le premier conduit 4 est donc en communication de fluide avec les orifices d'entrée 2 et de sortie 3 de gaz.

La bride circulaire 5 comporte des trous taraudés 7 régulièrement espacés pour l'insertion de la tige d'organes de fixation du type boulons, ce qui permet la fixation de cette soupape à un port de sortie de gaz d'un conteneur-citerne.

Le corps de soupape est de préférence réalisé en acier inoxydable.

Un siège d'obturateur 8 est placé sur la surface externe de la bride circulaire 5 et entoure l'orifice de sortie 3 de gaz. Ce positionnement du siège 8 à l'extérieur du corps de soupape contraint le gaz de surpression à s'échapper vers l'extérieur du conteneur-citerne.

La soupape comprend également un obturateur comportant un joint 9 destiné à coopérer avec le siège d'obturateur 8 pour assurer l'étanchéité de la soupape. Ce joint 9 est reçu dans un logement prévu à cet effet sur la surface interne d'un couvercle 10 de l'obturateur, ledit couvercle 10 étant destiné à coiffer partiellement la surface externe de la bride circulaire 5 lorsque le joint 9 est en contact étanche avec le siège d'obturateur 8.

Ce joint 9 est réalisé dans un matériau déformable et apte à résister aux éventuelles attaques corrosives du gaz de surpression. A titre purement illustratif, il est en PTFE (Poly-tétra-fluoroéthylène).

Le couvercle 10 de l'obturateur est fixé à l'extrémité d'un arbre d'obturateur 11 reçu partiellement dans un deuxième conduit 12 placé lui-même dans le premier conduit 4. Les premier et deuxième conduits 4, 12 sont des tubes coaxiaux sensiblement centrés sur les orifices d'entrée 2 et de sortie 3. L'arbre 11 est monté de manière amovible ou non sur un support d'arbre 13 relié au deuxième conduit 12 par une ou plusieurs ailettes 14.

Ce deuxième conduit 12 est en communication de fluide avec les orifices d'entrée 2 et de sortie 3 de la soupape de sorte que le passage d'un flux de gaz de surpression dans cette soupape entraîne le déplacement du deuxième conduit 12 entre une première position dite de fermeture de soupape où l'obturateur est en contact étanche avec le siège 8 et une deuxième position dite de déchargement où l'obturateur est au moins partiellement placé en saillie du corps de soupape 1, le joint 9 étant alors décalé du siège 8 pour le passage du volume de gaz.

Le corps de soupape 1 comprend également une portion de tube 15 solidaire de la bride circulaire 5 et en communication de fluide avec l'orifice de sortie 3 de gaz. Cette portion de tube 15 qui est sensiblement centrée sur l'orifice de sortie 3 de gaz, reçoit une extrémité du deuxième conduit 12. Cette portion de tube 15 constitue un élément de guidage pour guider le déplacement du deuxième conduit 12 entre les deux positions précitées. Elle définit par ailleurs par son extrémité en contact avec la bride 5 une butée stoppant le déplacement du deuxième conduit 12 et par conséquent, celui de l'obturateur.

La soupape comprend également un ressort de compression 16 qui est placé entre les parois des premier 4 et deuxième 12 conduits isolant ainsi ce ressort 16 du canal formé par le deuxième conduit et servant à l'évacuation du flux de gaz de surpression.

Ce ressort 16 à une double fonction. Tout d'abord, il évite que la soupape ne se déclenche en dessous d'une pression seuil appelée pression de tarage de la soupape. II permet ensuite, comme il sera expliqué plus loin, de ramener le deuxième conduit 12 dans sa première position après décharge du gaz de surpression afin de refermer la soupape de sécurité.

Ce ressort 16 est lié par une de ses extrémités 17 à la bride circulaire 5, ladite extrémité étant alors reçue dans un logement. Le deuxième conduit 12 comprend par ailleurs un élément annulaire 18 formant saillie à son extrémité opposée à l'orifice de sortie 3 de gaz. Cet élément annulaire 18 a une forme sensiblement tronconique pour guider le flux de gaz entrant dans le corps de soupape 1 par l'extrémité du premier conduit 4 vers le canal formé par le deuxième conduit 12. L'autre extrémité 19 du ressort 16 vient en appui contre une face de cet élément annulaire 18 de sorte que le déplacement du deuxième conduit 12 de sa première position vers sa seconde position déplace le ressort 16 en compression.

Un disque de rupture 20 est monté dans la partie inférieure du corps de soupape par l'intermédiaire d'une bride de support 21 de disque. Ce disque de rupture 20 est pincé entre le corps de soupape et la bride de support 21 qui est liée au corps par des organes de fixation du type boulon assurant l'effort de serrage (non représentés). Ce disque de sécurité 20 présente une résistance à la pression supérieure à la pression de tarage de la soupape de sécurité.

Lorsque le gaz contenu dans le conteneur-citerne est en surpression, le disque de sécurité 20 s'ouvre en pétale et donne ainsi accès au volume intérieur du corps de la soupape 1. Le volume de gaz en surpression entre par l'orifice d'entrée 2 du gaz dans le premier conduit 4 puis passe dans le deuxième conduit 12 en étant guidé en cela par la forme sensiblement tronconique de l'élément annulaire 18 placé en saillie à l'extrémité du deuxième conduit 12.

Le volume de gaz en surpression se déplace alors dans le deuxième conduit 12 vers l'orifice de sortie 3. Dans son cheminement, le volume de gaz ne rencontre que l'arbre de l'obturateur 11 et les pattes 14 assurant la fixation de celui-ci dans le deuxième conduit 4. Son écoulement étant très peu perturbé, le volume de gaz de surpression attaque directement l'obturateur en exerçant une force sur sa surface interne.

Lorsque la force exercée par le volume de gaz de surpression présent dans la soupape est supérieure à la force du ressort de compression, le couvercle 10 de l'obturateur est poussé vers l'extérieur.

La force exercée sur le couvercle 10 de l'obturateur par le volume de gaz de surpression au travers de l'orifice de sortie 3 entraîne en déplacement le deuxième conduit 12 par rapport au premier conduit 4, ce qui va comprimer le ressort de compression. Au fur et à mesure que le couvercle d'obturateur 10 s'écarte du siège 8, la pression exercée par le gaz de surpression s'applique sur la surface entière de ce couvercle 10. Le gaz de surpression peut s'évacuer rapidement vers l'extérieur en suivant un chemin symbolisé par les flèches 22 sur la Figure 2.

Lorsque la force de rappel exercée par le ressort de compression 16 devient supérieure à la force exercée par le gaz présent dans le deuxième conduit sur le couvercle 10, le deuxième conduit 12 est repoussé vers sa première position par le ressort de compression 16. Le joint 9 de l'obturateur est alors ramené en contact étanche avec le siège d'obturateur 8.

## Revendications

1. Soupape de sécurité de surpression comportant un corps de soupape (1) comprenant à une première extrémité un orifice d'entrée (2) de gaz et à son autre extrémité un orifice de sortie (3) de gaz, un siège d'obturateur entourant ledit orifice de sortie (3), ledit corps de soupape (1) étant destiné à être connecté à un conteneur, et un obturateur comportant un joint (9) destiné à coopérer avec ledit siège (8) d'obturateur pour assurer l'étanchéité de ladite soupape, **caractérisée en ce que**
- ledit corps de soupape (1) comporte un premier conduit (4) en communication de fluide avec les orifices d'entrée et de sortie du corps de soupape, et un deuxième conduit (12) placé dans ledit premier conduit (4), ledit obturateur étant placé partiellement dans ledit deuxième conduit (12) en étant relié de manière amovible ou non audit deuxième conduit (12),
- ledit deuxième conduit (12) est en communication de fluide avec lesdits orifices d'entrée et de sortie en étant centré sensiblement sur lesdits orifices afin que le passage d'un volume de gaz de surpression dans ladite soupape entraîne le déplacement dudit deuxième conduit (12) entre une première position dite de fermeture de soupape où ledit obturateur est en contact étanche avec ledit siège (8) et une deuxième position dite de déchargement où ledit obturateur est au moins partiellement placé en saillie dudit corps de soupape (1), ledit joint (9) étant alors décalé dudit siège (8) pour le passage dudit volume de gaz,
- ladite soupape comprend un organe de rappel (16) placé entre ledit premier conduit (4) et ledit deuxième conduit (12) pour déplacer ledit deuxième conduit (12) dans sa première position après décharge du gaz de surpression.

2. Soupape selon la revendication 1, **caractérisée en ce que** lesdits premier et deuxième conduits (4, 12) sont des tubes coaxiaux.

3. Soupape selon la revendication 1 ou 2, **caractérisée en ce qu'**une extrémité dudit organe de rappel (16) est solidaire du deuxième conduit (12).

4. Soupape selon la revendication 1 ou 2, **caractérisée en ce que** ledit deuxième conduit (12) comprenant un élément annulaire (18) placé en saillie sur la surface externe dudit deuxième conduit (12), une extrémité (19) dudit organe de rappel (16) est en appui sur une face dudit élément annulaire (18).

5. Soupape selon la revendication 3 ou 4, **caractérisée en ce que** ledit organe de rappel est un ressort (16).

6. Soupape selon l'une quelconque des revendications 1 à 5, **caractérisée en ce qu'**elle comprend un élément de guidage (15) pour guider le déplacement du deuxième conduit (12) entre les positions de fermeture de soupape et de déchargement.

7. Soupape selon l'une quelconque des revendications 1 à 6, **caractérisée en ce que** ledit deuxième conduit (12) et/ou ledit élément de guidage (15) comportent des orifices pour établir une communication de fluide entre ledit premier conduit (4) et ledit deuxième conduit (12) et/ou ledit élément de guidage (15).

8. Soupape selon l'une quelconque des revendications 1 à 7, **caractérisée en ce que** ledit obturateur est relié audit deuxième conduit (12) par au moins une patte (14).

9. Soupape selon l'une quelconque des revendications 1 à 8, **caractérisée en ce que** ladite soupape comporte un disque de rupture (20) monté sur le corps de soupape (1) et placé en amont dudit deuxième conduit (12) sur le passage du gaz de surpression dans ladite soupape.

10. Conteneur-citerne équipé d'au moins une soupape de sécurité selon l'une quelconque des revendications 1 à 9.
